# EUROPEAN PATENT APPLICATION

(11) **EP 4 372 649 A1**
(43) Date of publication of application: **22.05.2024**
(21) Application number: 22306704.2
(22) Date of filing: 18.11.2022
(51) Int. Cl.: G06Q 10/087, G06Q 10/20, G06Q 10/047, G06Q 10/0639, G06Q 10/0875, G06Q 10/10, G06Q 10/04, G06Q 50/06, G06Q 10/0631, G01F 23/00, G01F 23/80

(54) **AUTOMATED SUPPLY DEMAND MANAGEMENT SYSTEM**

(71) Applicant: BULL SAS, 78340 Les Clayes-Sous-Bois (FR)
(72) Inventor: PATEL, Krupal, 395007 Surat City (IN)
(74) Representative: IPAZ

(57) **Abstract**

The invention relates to a computer implemented method for managing fuel stocks of at least one gas station (4) including a fuel tank (8), the method comprising, for each gas station:
- calculating an expected stock-out time, including:
• predicting forecast fuel sales from a current starting date;
• determining a current net available stock based on a fuel stock in the fuel tank;
• based on the net available stock and the forecast fuel sales, calculating the expected stock-out time as the date at which the cumulated forecast fuel sales, from the current starting date, exceed the net available stock;

- predicting a lead duration, as a duration between a generation of a fuel purchase order and a corresponding fuel delivery at said gas station;
the method further including, for each gas station, generating a supply instruction based on the calculated expected stock-out time and the corresponding predicted lead duration.

## Description

### Field of the invention

The present invention relates to a computer-implemented method for managing fuel stocks of at least one gas station.

The invention further relates to a computer program, a gas station management system and a fuel distribution network.

The field of the invention is the field of fuel delivery. The invention may also apply to any setup other than petrol station where one supply/manufacturing unit has to meet the demand of at least one retail outlet.

### Background

Fuels, like petrol and diesel, are the most consumed natural, non-renewable resource in the world, irrespective of the economy of the country. As such, delivery of these fuels to the end user is done via gas stations, where fuel is usually stored within an underground fuel tank in the gas station and is pumped by fuel dispensers into vehicles.

In general, these gas stations are retail outlets managed by large Oil and Gas companies or their partners.

When new inventory *(i.e.,* fuel) is required at the gas station level, gas station raises a fuel purchase order, which is then processed, and fuel is delivered accordingly.

However, such workflow is not satisfactory.

Indeed, when any gas station raises a fuel purchase order, the order has to generally undergo a number of validation steps (such as fund availability, product availability, and transport trucks availability, among others). Even though these validation steps are necessary for the reliability of the whole fuel supply chain, they induce a delay in the delivery of fuel to a gas station. Furthermore, further operations induce further delays, such as the time required for loading the trucks as per the fuel purchase order, and the transit time for a transport vehicle to reach a gas station from its depot/manufacturing location.

Consequently, when the fuel request is not raised in time, or when it is not processed in due course, a gas station may undergo a stock-out situation for long hours before fuel is delivered. This not only results in a loss of potential earnings, but also to a poor customer experience.

A purpose of the present invention is to overcome at least one of these drawbacks.

Another purpose of the invention is to provide a gas station management method for allocating fuel deliveries in a way that minimizes the occurrence of stock-out situations.

### Summary of the invention

To this end, the invention concerns a computer-implemented method for managing fuel stocks of at least one gas station, each gas station including at least one fuel tank for storing fuel of a corresponding fuel type,
the method comprising, for each gas station:
   - for each associated fuel type, calculating an expected stock-out time, including:
      - predicting forecast fuel sales, representative of an expected fuel amount withdrawn, from each fuel tank associated with said fuel type over time, from a current starting date;
      - based on a fuel stock measurement received from each fuel tank associated with said fuel type, determining a current net available stock for said fuel type;
      - based on the determined net available stock and the predicted forecast fuel sales, calculating the expected stock-out time as the date at which the cumulated forecast fuel sales over time, from the current starting date, exceed the net available stock;
   - predicting a lead duration, representative of a duration between a generation of a fuel purchase order and a corresponding fuel delivery at said gas station;
the method further including, for each gas station, generating a supply instruction based on the calculated expected stock-out time of at least one corresponding fuel type and the corresponding predicted lead duration.

The invention makes it possible to achieve at least one of these aims by a computer implemented method and a gas station management system.

Indeed, thanks to the invention, by taking into account an operational state of a gas station (for instance based on data representative of a past operation of the gas station, and/or data representative of a current fuel stock at the gas station), an automated computation of the expected stock-out time and the lead time is performed. Based on these indicators, a supply instruction can be reliably generated.

Such supply order may concern the priority with which an already existing fuel purchase order should be processed, or the time at which a fuel purchase order should be generated.

According to other advantageous aspects of the invention, the method includes one or several of the following features, taken alone or in any technically possible combination:
the method further comprises iteratively performing, over time, the steps of calculating the expected stock-out time and/or predicting the lead duration to output an updated expected stock-out time and/or an updated lead duration respectively, the method further comprising generating the supply instruction based on the updated expected stock-out time and/or the updated lead duration;
for each gas station and each fuel type, the corresponding current net available stock depends on the sum of, on the one hand, the fuel stock measured at each fuel tank of said gas station associated with said fuel type, and, on the other hand, the amount of fuel of said fuel type being currently decanted and/or the amount of fuel of said fuel type currently in transit to said gas station;
each gas station is associated with a corresponding fuel purchase order, and wherein generating the supply instruction includes:
   - based on the predicted lead duration and each calculated expected stock-out time associated with each gas station, sorting the fuel purchase orders;
   - outputting a first supply instruction for processing the fuel purchase orders based on a result of the sorting;
sorting the fuel purchase orders includes:
   - for each gas station and for each corresponding fuel type, computing a survival duration as the duration between the current starting date and the corresponding expected stock-out time;
   - for each gas station, identifying a minimum survival duration as the smallest calculated survival duration for said gas station;
   - for each gas station, calculating a maximum fulfilment duration as a difference between the corresponding identified minimum survival duration and the corresponding predicted lead duration; and
   - arranging the fuel purchase orders based on the maximum fulfilment duration of each respective gas station, and
   outputting the first supply instruction includes outputting an instruction for processing the fuel purchase orders in the ascending order of their maximum fulfilment duration;
generating the supply instruction includes, for each gas station:
   - comparing at least one corresponding buffer duration, based on the expected stock-out time associated with a corresponding fuel type, to at least one predetermined threshold;
   - outputting a second supply instruction for generating a fuel purchase order for said gas station based on a result of the comparison;
for each gas station and for each associated fuel type, the corresponding buffer duration is equal to a difference between, on the one hand, a duration between the current starting date and the expected stock-out time, and, on the other hand, the lead duration associated with said gas station;
for each gas station, the step of comparing includes comparing the smallest corresponding buffer duration to a first predetermined threshold of the at least one predetermined threshold, and
   for each gas station, outputting the second supply instruction includes generating the fuel purchase order for said gas station if the smallest corresponding buffer duration is lower than the first predetermined threshold, the fuel purchase order including a first amount of fuel that is greater than 0, preferably greater than a predetermined minimum amount, for a first fuel type which is associated with the smallest buffer duration;
for each gas station, outputting the second supply instruction further includes determining the first amount of fuel so as to minimize an expected stock-out time deviation after delivery of the first amount of fuel to said gas station;
for each gas station, the step of comparing further includes comparing each buffer duration to a second predetermined threshold of the at least one predetermined threshold, and
   for each gas station, and for each second fuel type, the fuel purchase order further including a respective second amount of fuel that is greater than 0, preferably greater than a predetermined minimum amount,
   each second fuel type being a fuel type, distinct from the first fuel type, for which the buffer duration is lower than the second predetermined threshold;
for each gas station, outputting the second supply instruction further includes determining each second amount of fuel so as to minimize an expected stock-out time deviation after delivery of the first amount and of each second amount to said gas station.

According to another aspect of the same invention, it is proposed a computer program comprising instructions, which when executed by a computer, cause the computer to carry out the steps of the method as defined above.

The computer program may be in any programming language such as C, C++, JAVA, Python, etc.

The computer program may be in machine language.

The computer program may be stored, in a non-transient memory, such as a USB stick, a flash memory, a hard-disc, a processor, a programmable electronic chop, etc.

The computer program may be stored in a computerized device such as a Smartphone, a tablet, a computer, a server, etc.

The invention also relates to a gas station management system for managing fuel stocks of at least one gas station, each gas station including at least one fuel tank for storing fuel of a corresponding fuel type,
the gas station management system being configured to, for each gas station:
   - for each associated fuel type, calculate an expected stock-out time, the expected stock-out time calculation including:
      - predicting forecast fuel sales, representative of an expected fuel amount withdrawn, from each fuel tank associated with said fuel type over time, from a current starting date;
      - based on a fuel stock measurement received from each fuel tank associated with said fuel type, determining a current net available stock for said fuel type;
      - based on the determined net available stock and the predicted forecast fuel sales, calculating the expected stock-out time as the date at which the cumulated forecast fuel sales over time, from the current starting date, exceed the net available stock;
   - predict a lead duration, representative of a duration between a generation of a fuel purchase order and a corresponding fuel delivery at said gas station;
the gas station management system being further configured to generate, for each gas station, a supply instruction based on the calculated expected stock-out time of at least one corresponding fuel type and the corresponding predicted lead duration.

The gas station management system may be a personal device such as a smartphone, a tablet, a Smartwatch, a computer, any wearable electronic device, etc.

The gas station management system according to the invention may execute one or several applications to carry out the method according to the invention.

The gas station management system according to the invention may be loaded with, and configured to execute, the computer program according to the invention.

The invention also relates to a fuel distribution network including at least one gas station and a gas station management system as defined above for managing each gas station, each gas station including at least one fuel tank for storing fuel of a corresponding fuel type, each fuel tank including at least one sensor configured to output a fuel stock measurement signal indicative of a fuel stock measurement for said fuel tank.

### Brief description of the drawings

Other advantages and characteristics will become apparent on examination of the detailed description of an embodiment which is in no way limitative, and the attached figures, where:
- figure 1 is a schematic representation of a fuel distribution network according to the invention; and
- figure 2 is a graph representing an evolution, over time, for two fuel types, of respective net available stocks at a given gas station of the fuel distribution network of figure 1, as predicted by a gas station management system of said fuel distribution network.

### Description of the figures and embodiments

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

Of course, the invention is not limited to the examples detailed below.

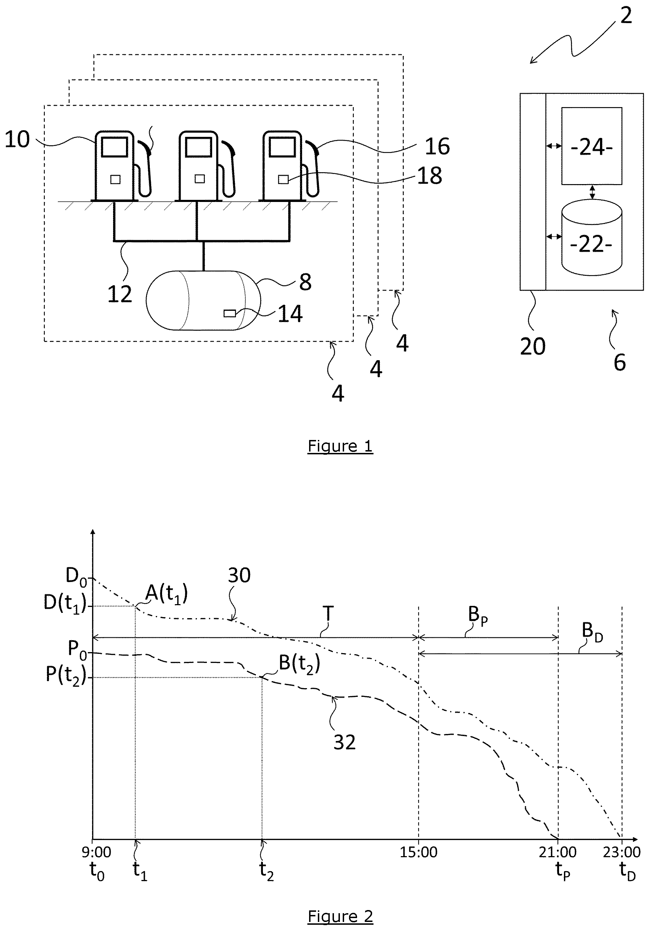

A fuel distribution network 2 according to the invention is shown on figure 1.

The fuel distribution network 2 includes at least one gas station 4 and a gas station management system 6 connected to each gas station 4.

### Gas station 4

Gas stations may also be known as filling stations, fuelling stations, gasoline stands, petrol pumps, petrol bunks, petrol stations, service stations, fuel stations, etc.

Each gas station 4 includes at least one fuel tank 8 and at least one fuel dispenser 10 for providing fuel to customers.

### Fuel tank 8

Each fuel tank 8 is intended for storing fuel of a corresponding fuel type.

For instance, said fuel type may be one of gasoline (or "petrol"), diesel, compressed natural gas, compressed hydrogen (or "CH₂", "CGH₂", "CGH2"), hydrogen compressed natural gas (or "HCNG"), liquefied petroleum gas (or "LPG"), liquid hydrogen, kerosene, alcohol fuel (such as methanol, ethanol, butanol, propanol), biofuel (such as straight vegetable oil, biodiesel), and the like.

Each fuel tank 8 is, for instance, an underground tank located beneath a concrete platform supporting the corresponding gas station 4.

Each fuel tank 8 is fluidly connected to at least one fuel dispenser 10, preferably to each fuel dispenser 10, through a pipe 12.

Furthermore, each fuel tank 8 includes at least one tank sensor 14 configured to output a fuel stock measurement signal indicative of a fuel stock measurement for said fuel tank 8.

As it will become apparent from the description below, each tank sensor 14 is configured to output the corresponding fuel stock measurement signal to the gas station management system 6. For instance, each tank sensor 14 is configured to output the corresponding fuel stock measurement signal at predefined interval and frequency as per the need of gas management companies (for example at every 30 minutes).

### Fuel dispenser 10

Each fuel dispenser 10 includes at least one nozzle 16 for dispensing fuel to customers.

Preferably, each fuel dispenser 10 further includes an output probe 18 configured to deliver a reporting signal representative of an operation of said fuel dispenser 10 over time.

Preferably, the reporting signal includes data representative of the amounts of each fuel sold to each customer, and may further include additional data such as sale date, price, nozzle start and end meter readings, and/or fuel properties.

As it will be disclosed below, each output probe 18 is configured to output the corresponding reporting signal to the gas station management system 6.

Preferably, the output probe 18 is configured to deliver the corresponding reporting signal on a real time basis, or when a customer is served.

### Gas station management system 6

The gas station management system 6 (also referred to as "management system") is configured to manage fuel stocks of each gas station 4.

Preferably, the management system 6 is configured to process fuel purchase orders received from each gas station 4, and/or to automatically generate fuel purchase orders for at least part of the gas stations 4.

As shown on figure 1, the management system 6 includes an input/output interface 20 (or "I/O interface"), a memory 22 and a processing unit 24 connected to each other.

### I/O interface 20

The I/O interface 20 is configured to receive, from each gas station 4, each corresponding fuel stock measurement signal. For instance, the I/O interface 20 is configured to receive each fuel stock measurement signal at a predefined interval and frequency as per the need of gas management companies (for example at every 30 minutes).

Preferably, the I/O interface 20 is also configured to receive, from each gas station 4, each corresponding reporting signal. Preferably, the I/O interface 20 is also configured to receive, from an ERP (for "Enterprise Resource Planning") system (not shown), management data representative of the processing of fuel purchase orders for each gas station 4.

The I/O interface is further configured to output, to a fuel delivery facility (not shown), supply instructions for supplying fuel to one or more gas stations 4.

### Memory 22

The memory 22 is configured to store the fuel stock measurement signal received from each gas station 4 through the I/O interface 20.

Preferably, the memory 22 is also configured to store the reporting signal received from each gas station 4 through the I/O interface 20. Preferably, the memory 22 is also configured to store the management data received from the ERP system.

Preferably, the memory 22 is configured to store at least one fuel purchase order associated with a respective gas station 4.

Preferably, the memory 22 is also configured to store at least one predetermined threshold.

### Processing unit 24

The processing unit 24 is configured to generate a supply instruction relating to at least one gas station 4, based on an operative state of said gas station 4.

The supply instructions may relate to the processing of fuel purchase orders associated with at least part of the gas stations 4, and more specifically to the order in which such fuel purchase orders should be processed, as will be understood from the description below. Alternatively, or in addition, the supply instructions may relate to the automatic generation of fuel purchase orders.

More precisely, the processing unit 24 is configured to generate said supply instruction based on an expected stock-out time and a predicted lead duration associated with each gas station 4.

By "stock-out time" of a fuel type at a given gas station 4, it is meant, in the context of the present invention, a date at which the stock of fuel of said fuel type, at said gas station 4, reaches 0.

Furthermore, by "lead duration" of a gas station 4, it is meant, in the context of the present invention, an indication of the duration between a generation of a fuel purchase order associated with said gas station 4 and the corresponding fuel delivery at said gas station. In other words, the lead duration represents the time elapsed between a first date at which fuel is ordered for a gas station 4, and a second date at which the fuel is delivered at said gas station 4.

As stated above, the processing unit 24 is configured to generate the supply instruction based on the expected stock-out time and the predicted lead duration associated with each gas station 4. Computation of the expected stock-out time and the lead duration will now be disclosed.

### Expected stock-out time calculation

For each gas station 4, and for each associated fuel type, the processing unit 22 is configured to calculate the corresponding expected stock-out time.

To calculate the expected stock-out time for each fuel type associated with the gas station 4, the processing unit 24 is configured to:
- predict corresponding forecast fuel sales;
- determine a current net available stock for said fuel type; and
- based on the determined net available stock and the predicted forecast fuel sales, calculate the expected stock-out time.

### Forecast fuel sales prediction

The forecast fuel sales are representative of an expected fuel amount withdrawn, over time, from each fuel tank 8 associated with said fuel type, from a current starting date.

Preferably, the processing unit 24 is configured to determine the forecast fuel sales based on data included in the reporting signal received from each output probe 18 of the gas station 4.

For instance, the processing unit 24 is configured to determine the forecast fuel sales based on fuel sales data representative of fuel sales, at the fuel dispensers 10 of the gas station 4, over N days prior to the current starting date (such as the 7 last days). Preferably, said fuel sales data are extracted from the aforementioned reporting signals associated with said gas station 4.

The processing unit 24 is preferably configured to determine the forecast fuel sales with a predetermined granularity *(i.e.,* the time interval between two successive values in the predicted forecast fuel sales), for instance 30 minutes.

### Net available stock determination

Moreover, for each gas station 4, the processing unit 24 is configured to determine the current net available stock for a given associated fuel type based on the fuel stock measurement signal received from each fuel tank 8 associated with said fuel type.

Advantageously, for each gas station 4 and each fuel type, the corresponding current net available stock is not only representative of the fuel stock stored in each fuel tank 8 associated with said fuel type, but also representative of the amount of fuel that is in transit mode.

For a gas station 4 and an associated fuel type, by "amount of fuel in transit mode", it is meant, in the context of the present invention, the amount of fuel of said fuel type that is being currently decanted and/or the amount of fuel of said fuel type that is currently in transit to said gas station.

In this case, for each gas station 4 and each fuel type, the processing unit 24 is configured to determine the corresponding current net available stock based on the sum of, on the one hand, the measured total amount of fuel of said fuel type at said gas station, and, on the other hand, the amount of fuel of said fuel type being in transit mode.

In the present case, for each gas station 4 and for each fuel type, the processing unit is configured to determine the total amount of fuel based on the fuel stock measurement signals received from the corresponding fuel tank(s) 8.

For instance, the current net available stock is equal to the sum of the measured amount of fuel in stock *(i.e.,* present in the fuel tanks) and the amount of fuel in transit mode.

Preferably, for each gas station 4 and for each corresponding fuel type, the processing unit 24 is configured to determine the respective amount of fuel currently in transit mode based on the management data received from the ERP system, for instance based on fuel purchase orders that have already been processed for said gas station 4.

This method for determining the net available stock is advantageous, as it takes into account not only the fuel stock that is already on site, but also the amount of fuel that is bound to be delivered at the gas station, thereby preventing excessive fuel purchases, and/or preventing prioritizing fuel purchase orders for gas stations that may currently have fuel tanks 8 with low fuel levels, but for which a fuel restock has already been planned, approved and processed.

### Expected stock-out time calculation

Furthermore, as stated earlier, the processing unit 24 is configured to calculate the expected stock-out time based on the determined net available stock and the predicted forecast fuel sales.

More precisely, the processing unit 24 is configured to calculate the expected stock-out time as the date at which the forecast fuel sales, cumulated over time, from the current starting date, exceed the net available stock.

The calculation of the expected stock-out time can be easily understood based on the example of figure 2.

In this figure, Do and Po represent the net available stock of diesel and petrol, respectively, at a given gas station 4, at the current starting date to. In this case, t₀ is 9am of day 1.

Curve 30 shows the evolution of the estimated available stock of diesel over time. More precisely, the ordinate value D(ti) of point A on curve 30 having abscissa t₁ is computed by subtracting, from the net available stock Do, the forecast fuel sales for diesel cumulated *(i.e.,* added, or integrated) from the current starting date to to date t₁.

In this example, the expected stock-out time for diesel is the date at which the forecast fuel sales of diesel, cumulated over time from the current starting date to, exceed the net available stock Do. In other words, the expected stock-out time for diesel is the date t_{D} at which curve 30 crosses the x-axis. In the example, t_{D} is 11pm of day 1.

Similarly, curve 32 shows the evolution of the estimated available stock of petrol over time. More precisely, the ordinate value P(t₂) of point B on curve 32 having abscissa t₂ is computed by subtracting, from the net available stock Po, the forecast fuel sales for petrol cumulated from the current starting date to to date t₂.

In this example, the expected stock-out time for petrol is the date at which the forecast fuel sales of petrol, cumulated over time from the current starting date to, exceed the net available stock Po. In other words, the expected stock-out time for diesel is the date tp at which curve 32 crosses the x-axis. In the example, tₚ is 9pm of day 1.

### Lead duration prediction

As stated previously, for each gas station 4, the processing unit 24 is configured to predict the corresponding lead duration.

For instance, the processing unit 24 is configured to determine the lead duration based on fuel purchase processing data and fuel delivery data of latest N successful deliveries before the current starting date (such as the 7 last fuel deliveries). Preferably, said fuel purchase processing data and fuel delivery data are extracted from the aforementioned management data provided by the ERP system.

For example, on figure 2, the lead time T is equal to 6 hours, so that a fuel purchase order placed at 9am results in a fuel delivery at 3pm.

Advantageously, the processing unit 24 is configured to iteratively perform, over time, the calculation of the expected stock-out time and/or the prediction of the lead duration to output an updated expected stock-out time and an updated lead duration respectively. In this case, the processing unit 24 is configured to generating the supply instruction based on the updated expected stock-out time and/or updated lead duration.

This feature is advantageous, as it allows to generate supply instructions based on up-to-date information, thereby increasing the reliability of the supply instructions. As an example, any sudden spike in customer sales which had not been anticipated during the initial determination of the forecast fuel sales is taken into account at the next iteration performed by the processing unit 24.

### Supply instructions generation

As mentioned previously, the processing unit 24 is configured to generate, for each gas station 4, a corresponding supply instruction. Such supply instructions may relate to the processing of fuel purchase orders and/or to the automatic generation of fuel purchase orders.

### Fuel purchase order priority ranking

Preferably, in a situation where each gas station 4 of a set of gas stations is associated with a corresponding fuel purchase order, the processing unit 24 is configured to sort the fuel purchase orders based on their respective predicted lead durations and each of their respective calculated expected stock-out times.

Furthermore, the processing unit is configured to output a first supply instruction for processing the fuel purchase orders based on a result of the sorting.

More precisely, to sort the fuel purchase orders, the processing unit 24 is configured to:
- for each gas station 4 and for each corresponding fuel type, compute a corresponding survival duration;
- for each gas station 4, identify a minimum survival duration;
- for each gas station 4, calculate a maximum fulfilment duration.

In this case, to sort the fuel purchase orders, the processing unit 24 is configured to arrange the fuel purchase orders based on the maximum fulfilment duration of each corresponding gas station.

More precisely, for each gas station 4 and for each corresponding fuel type, the processing unit 24 is configured to compute the survival duration as the duration between the current starting date and the corresponding expected stock-out time.

For instance, on figure 2, the survival duration for diesel is equal to the duration between to and t_{D}, that is to say 14 hours. Moreover, the survival duration for petrol is equal to the duration between to and t_{P}, that is to say 12 hours.

Furthermore, for each gas station 4, the processing unit 24 is configured to identify the corresponding minimum survival duration as the smallest calculated survival duration for said gas station 4.

In the example of figure 2, the minimum survival duration survival duration is 12 hours.

Moreover, for each gas station 4, the processing unit is configured to calculate the maximum fulfilment duration as a difference between the corresponding identified minimum survival duration and the corresponding predicted lead duration.

Consequently, for a given gas station 4, the associated maximum fulfilment duration is representative of the time left to execute a fuel purchase order in order to prevent a fuel stock out situation at said gas station.

In the example of figure 2, the maximum fulfilment duration is equal to 6 hours.

The processing unit 24 is further configured to, once the fuel purchase orders are arranged based on the maximum fulfilment duration of each corresponding gas station, output the aforementioned first supply instruction.

More precisely, in this case, the processing unit 24 is configured to output an instruction for processing the fuel purchase orders in the ascending order of their maximum fulfilment duration. In other words, the lower the maximum fulfilment duration of a gas station 4, the higher the priority in processing the associated fuel purchase order.

### Fuel purchase order generation

Alternatively, or in addition, for each gas station 4, the processing unit 24 is configured to monitor, over time, the amounts of fuel stored in each corresponding fuel tank, and to generate the supply instruction accordingly.

More precisely, for each gas station 4, the processing unit 24 is configured to compare at least one corresponding buffer duration to at least one predetermined threshold.

The processing unit 24 is also configured to output a second supply instruction for generating a fuel purchase order for said gas station based on a result of the comparison.

For each gas station 4, the processing unit 24 is configured to determine at least one buffer duration based on the expected stock-out time associated with a corresponding fuel type.

Preferably, for each gas station 4 and for each associated fuel type, the corresponding buffer duration is equal to a difference between, on the one hand, a duration between the current starting date and the expected stock-out time, and, on the other hand, the lead duration associated with said gas station.

For instance, on figure 2, the buffer duration B_{D} for diesel is equal to 8 hours, whereas the buffer duration B_{P} for petrol is equal to 6 hours.

Preferably, for each gas station 4, to perform such comparison, the processing unit 24 is configured to compare the smallest corresponding buffer duration to a first predetermined threshold.

In this case, for a given gas station 4, if the corresponding smallest buffer duration is lower than the first predetermined threshold, then the processing unit 24 is configured to generate a fuel purchase order for said gas station 4. Said generation of the fuel purchase is included in the outputting of the second supply instruction.

On the other hand, the processing unit 24 is configured so as not to generate a fuel purchase order if the smallest buffer duration associated with the gas station 4, at a given time, is greater than the first predetermined threshold.

More precisely, such fuel purchase order includes a first amount of fuel that is greater than 0 for the fuel type (called "first fuel type") which is associated with the smallest buffer duration (the smallest buffer duration being lower than the first predetermined threshold, as stated above).

Preferably, the first amount is greater than a predetermined minimum amount, representative of the minimum fuel amount that can be ordered. For instance, the processing unit 24 is configured to determine the minimum amount based on last N fuel purchase orders for said gas station 4 before the current starting date (such as the 7 last purchase orders), extracted from the management data provided by the ERP system.

Advantageously, for each gas station 4, the processing unit 24 is configured, in order to output the second supply instruction, to further determine the first amount of fuel so as to minimize an expected stock-out time deviation, across all the fuel types of said gas station, after delivery of the first amount of fuel of the first fuel type to said gas station 4.

This is advantageous, since future stock-out situations for all the fuel types provided at a given gas station are also considered while determining the ordered amount of fuel, thereby minimizing the number of fuel deliveries to said gas station over time.

Preferably, for each gas station 4, the processing unit 24 is further configured to compare, during the aforementioned comparison, each buffer duration to a second predetermined threshold.

Each fuel type, distinct from the first fuel type, for which the associated buffer duration is lower than the second predetermined threshold is referred to as a second fuel type.

In this case, for each gas station 4, and for each second fuel type, the processing unit 24 is configured so that the fuel purchase order further includes a respective second amount of fuel that is greater than 0.

Preferably, the second amount is greater than the aforementioned predetermined minimum amount.

Advantageously, for each gas station 4, the processing unit 24 is configured, in order to output the second supply instruction, to further determine each second amount of fuel so as to minimize an expected stock-out time deviation after delivery of the first amount and of each second amount to said gas station.

Better understanding of the determination of the ordered amount of fuel will arise from the example below.

In this example, the expected stock-out time for petrol and diesel is 12:00pm and 5:00pm of day 1 respectively. Thus the current deviation in expected stock-out time between petrol and diesel is 5 hours.

| **Fuel type** | **Current starting date** | **Net stock (L)** | **Expected stock-out time** |
|---|---|---|---|
| Petrol | 09:00, day 1 | 2000 | 12:00, day 1 |
| Diesel | 09:00, day 1 | 6000 | 17:00, day 1 |

Assuming that, as a result of the comparison of each buffer time to the appropriate threshold, the fuel purchase order automatically generated by the processing unit 24 relates to ordering both petrol and diesel.

Assuming that the minimum amount of fuel that can be purchased is 20,000 L distributed in four equally sized compartments of 5,000 L each, the following three combinations are available for placing a fuel purchase order:

| **Fuel type** | **Combination 1** | **Combination 2** | **Combination 3** |
|---|---|---|---|
| Petrol | 5,000 | 10,000 | 15,000 |
| Diesel | 15,000 | 10,000 | 5,000 |

For each of these three combinations, the processing unit 24 estimates the next expected stock-out time, by operating as described above, and by incorporating, for each fuel type, the fuel amount associated with said combination into the corresponding net available stock (for instance by including it in the amount of fuel in transit mode).

An exemplary outcome for the expected stock-out times is:

| **Fuel type** | **Combination 1** | **Combination 2** | **Combination 3** |
|---|---|---|---|
| Petrol | 12:00, day 2 | 20:00, day 3 | 12:00, day 6 |
| Diesel | 17:00, day 4 | 12:00, day 3 | 08:00, day 2 |
| **Deviation** | 53 hours | 8 hours | 100 hours |

The minimum deviation is 8 hours, and corresponds to the second combination. Consequently, the fuel amounts in the fuel purchase order generated by the processing unit are 10,000 L for petrol and 10,000 L for diesel.

### Operation

Operation of the gas station management system 6 will now be disclosed.

At a given starting date, for each gas station 4, and for each associated fuel type, the processing unit 22 calculates the corresponding expected stock-out time. The processing unit 24 also predicts the lead duration for said gas station 4.

Then, based on the calculated expected stock-out time and the predicted lead duration, the processing unit 24 generates the corresponding supply instruction.

For instance, for each gas station 4 of a set of gas stations associated with a corresponding fuel purchase order, the processing unit 24 calculates the corresponding maximum fulfilment duration based on the calculated expected stock-out time and the predicted lead duration.

Then, the processing unit 24 sorts the fuel purchase orders based on their maximum fulfilment duration.

Then, the processing unit 24 outputs the first supply instruction, which includes an instruction for processing the fuel purchase orders in the ascending order of their maximum fulfilment duration.

Alternatively, or in addition, for each gas station 4, the processing unit 24 monitors, over time, the amounts of fuel stored in each corresponding fuel tank.

Then, the processing unit 24 determines, for each fuel type of a given gas station 4, the corresponding buffer duration, and compares the smallest buffer duration to the first predetermined threshold.

If the smallest buffer duration, then the processing unit 24 outputs the second supply instruction, which includes a fuel purchase order for the first fuel type associated with the smallest buffer duration.

Furthermore, the processing unit 24 compares, each remaining buffer duration to a second predetermined threshold.

If a buffer duration is lower than the second predetermined threshold, then the then the second supply instruction further includes a fuel purchase order for the second fuel type associated with said buffer duration.

The processing unit 24 iteratively performs, overtime, the calculation of the expected stock-out time and/or the prediction of the lead duration, so as to generate the supply instruction based on the updated expected stock-out time and/or updated lead duration (i.e., data computed with a new starting date).

## Claims

1. A computer-implemented method for managing fuel stocks of at least one gas station (4), each gas station (4) including at least one fuel tank (8) for storing fuel of a corresponding fuel type,
the method comprising, for each gas station (4):
- for each associated fuel type, calculating an expected stock-out time, including:
• predicting forecast fuel sales, representative of an expected fuel amount withdrawn, from each fuel tank (8) associated with said fuel type over time, from a current starting date;
• based on a fuel stock measurement received from each fuel tank (8) associated with said fuel type, determining a current net available stock for said fuel type;
• based on the determined net available stock and the predicted forecast fuel sales, calculating the expected stock-out time as the date at which the cumulated forecast fuel sales over time, from the current starting date, exceed the net available stock;
- predicting a lead duration, representative of a duration between a generation of a fuel purchase order and a corresponding fuel delivery at said gas station (4);
the method further including, for each gas station (4), generating a supply instruction based on the calculated expected stock-out time of at least one corresponding fuel type and the corresponding predicted lead duration.

2. The method according to claim 1, further comprising iteratively performing, over time, the steps of calculating the expected stock-out time and/or predicting the lead duration to output an updated expected stock-out time and/or an updated lead duration respectively,
the method further comprising generating the supply instruction based on the updated expected stock-out time and/or the updated lead duration.

3. The method according to claim 1 or 2, wherein, for each gas station (4) and each fuel type, the corresponding current net available stock depends on the sum of, on the one hand, the fuel stock measured at each fuel tank (8) of said gas station (4) associated with said fuel type, and, on the other hand, the amount of fuel of said fuel type being currently decanted and/or the amount of fuel of said fuel type currently in transit to said gas station (4).

4. The method according to any one of claims 1 to 3, wherein each gas station (4) is associated with a corresponding fuel purchase order, and wherein generating the supply instruction includes:
- based on the predicted lead duration and each calculated expected stock-out time associated with each gas station (4), sorting the fuel purchase orders;
- outputting a first supply instruction for processing the fuel purchase orders based on a result of the sorting.

5. The method according to claim 4, wherein sorting the fuel purchase orders includes:
- for each gas station (4) and for each corresponding fuel type, computing a survival duration as the duration between the current starting date and the corresponding expected stock-out time;
- for each gas station (4), identifying a minimum survival duration as the smallest calculated survival duration for said gas station;
- for each gas station (4), calculating a maximum fulfilment duration as a difference between the corresponding identified minimum survival duration and the corresponding predicted lead duration; and
- arranging the fuel purchase orders based on the maximum fulfilment duration of each respective gas station (4), and
wherein outputting the first supply instruction includes outputting an instruction for processing the fuel purchase orders in the ascending order of their maximum fulfilment duration.

6. The method according to any one of claims 1 to 5, wherein generating the supply instruction includes, for each gas station (4):
- comparing at least one corresponding buffer duration, based on the expected stock-out time associated with a corresponding fuel type, to at least one predetermined threshold;
- outputting a second supply instruction for generating a fuel purchase order for said gas station (4) based on a result of the comparison.

7. The method according to any one of claims 6, wherein, for each gas station (4) and for each associated fuel type, the corresponding buffer duration is equal to a difference between, on the one hand, a duration between the current starting date and the expected stock-out time, and, on the other hand, the lead duration associated with said gas station (4).

8. The method according to claim 7, wherein, for each gas station (4), the step of comparing includes comparing the smallest corresponding buffer duration to a first predetermined threshold of the at least one predetermined threshold, and
wherein, for each gas station (4), outputting the second supply instruction includes generating the fuel purchase order for said gas station (4) if the smallest corresponding buffer duration is lower than the first predetermined threshold,
the fuel purchase order including a first amount of fuel that is greater than 0, preferably greater than a predetermined minimum amount, for a first fuel type which is associated with the smallest buffer duration.

9. The method according to claim 8, wherein, for each gas station (4), outputting the second supply instruction further includes determining the first amount of fuel so as to minimize an expected stock-out time deviation after delivery of the first amount of fuel to said gas station (4).

10. The method according to claim 8 or 9, wherein, for each gas station (4), the step of comparing further includes comparing each buffer duration to a second predetermined threshold of the at least one predetermined threshold, and
for each gas station (4), and for each second fuel type, the fuel purchase order further including a respective second amount of fuel that is greater than 0, preferably greater than a predetermined minimum amount,
each second fuel type being a fuel type, distinct from the first fuel type, for which the buffer duration is lower than the second predetermined threshold.

11. The method according to claim 9, wherein, for each gas station (4), outputting the second supply instruction further includes determining each second amount of fuel so as to minimize an expected stock-out time deviation after delivery of the first amount and of each second amount to said gas station (4).

12. Computer program comprising instructions, which when executed by a computer, cause the computer to carry out the steps of the method of any one of the preceding claims.

13. Gas station management system (6) for managing fuel stocks of at least one gas station (4), each gas station (4) including at least one fuel tank for storing fuel of a corresponding fuel type,
the gas station management system (6) being configured to, for each gas station (4):
- for each associated fuel type, calculate an expected stock-out time, the expected stock-out time calculation including:
• predicting forecast fuel sales, representative of an expected fuel amount withdrawn, from each fuel tank associated with said fuel type over time, from a current starting date;
• based on a fuel stock measurement received from each fuel tank associated with said fuel type, determining a current net available stock for said fuel type;
• based on the determined net available stock and the predicted forecast fuel sales, calculating the expected stock-out time as the date at which the cumulated forecast fuel sales over time, from the current starting date, exceed the net available stock;
- predict a lead duration, representative of a duration between a generation of a fuel purchase order and a corresponding fuel delivery at said gas station (4);
the gas station management system (6) being further configured to generate, for each gas station (4), a supply instruction based on the calculated expected stock-out time of at least one corresponding fuel type and the corresponding predicted lead duration.

14. Fuel distribution network (2) including at least one gas station (4) and a gas station management system (6) according to claim 13 for managing each gas station (4), each gas station (4) including at least one fuel tank (8) for storing fuel of a corresponding fuel type, each fuel tank (8) including at least one sensor (14) configured to output a fuel stock measurement signal indicative of a fuel stock measurement for said fuel tank.
